# EUROPEAN PATENT APPLICATION

(11) **EP 4 485 857 A1**
(43) Date of publication of application: **01.01.2025**
(21) Application number: 23315265.1
(22) Date of filing: 29.06.2023
(51) Int. Cl.: H04L 9/40, H04W 12/48, H04W 12/60, H04W 12/126

(54) **REMOVABLE SECURE ELEMENT HAVING IMPERSONATION PROTECTION**

(71) Applicant: THALES DIS FRANCE SAS, 92190 Meudon (FR)
(72) Inventor: Raguenet, Alain, 13390 Auriol (FR); Phan, Ly Thanh, 92350 Le Plessis Robinson (FR); Pauliac, Mireille, 13470 Carnoux en Provence (FR); Collet, Hervé, 13600 La Ciotat (FR); Dany, Vincent, 13400 Aubagne (FR); Galimard, Alexandra, 13600 La Ciotat (FR)
(74) Representative: Lotaut, Yacine Diaw

(57) **Abstract**

The present invention relates to a removable secure element having a memory to store at least a universal user identifier, a security context, a list of mobile equipment identifiers in which the removable secure element was previously inserted, said removable secure element being dedicated to be inserted in a mobile equipment compliant with plastic roaming connecting and authenticating automatically the mobile equipment to a serving network using the security context stored in the removable secure element as soon as the universal user identifier stored in the removable secure element is the same as the one associated to the security context on the serving network side, said removable secure element further having an application to monitor an identifier of a mobile equipment in which the removable secure element is inserted, said application implementing a retrieval of the identifier of the mobile equipment in which the removable secure element is inserted, a check of the presence of the retrieved identifier in the stored list of mobile equipment identifiers as stored, and, if the retrieved identifier is present in the list, a deletion of the security context as stored.

## Description

### FIELD OF THE INVENTION

The present invention relates to a removable secure element having protection against impersonation.

The invention also pertains to method to protect a removable secure element against impersonation of a universal identifier of a user of the removable secure element. It relates at last to an application dedicated to be installed and run in a removable secure element to implement the method of the invention.

### BACKGROUND OF THE INVENTION

Researchers revealed a potential vulnerability to impersonate someone else identity on the 3GPP network. Such attacks already appeared on the field and Mobile Network Operators are concerned.

In 5G, each subscriber receives a Subscription Permanent Identifier SUPI. It is a globally unique identifier that is assigned to each subscriber in the 5G system and that is provisioned in an Unified Data Repository UDR. In legacy technologies 3G/4G, similar identifiers exist and are known under the term IMSI.

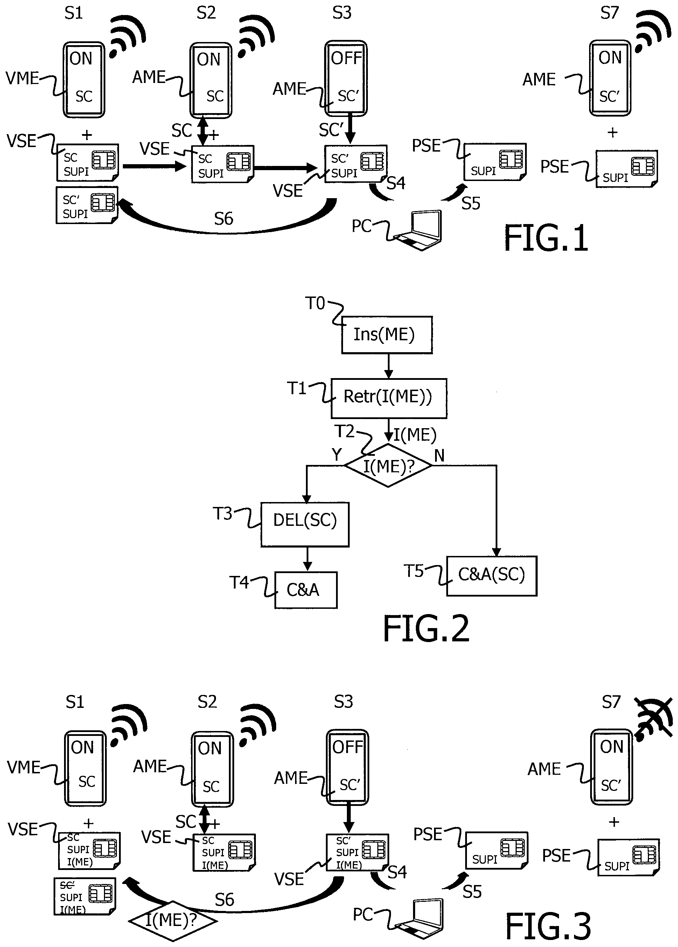

Figure 1 illustrates the identified vulnerability. It occurs when, in a step S1, an attacker temporarily takes a victim's secure element VSE from a victim's Mobile Equipment VME, previously connected and authenticated and inserts it, in a step S2, into an attacker's Mobile Equipment AME. This situation corresponds to a "plastic roaming" situation which enables a subscriber to use a same removable secure element in a new ME.

Such a plastic roaming uses a "security context" SC which is a state that is established locally at the ME and a serving network domain. It is represented by the "security context data" stored at the ME and a serving network. For example, security context in 5G is explained in TS33.501 - Paragraph 3.1 Definitions. Similar definitions are given in legacy 3G/4G standards.

Thanks to the rules as determined in the standards to enable the plastic roaming, the attacker indeed uses the security context SC stored in the victim's VSE and avoid re-authentication to the network. Thus, at step S2, the attacker's ME is connected and authenticated. This corresponds to a plastic roaming situation.

The attack then consists in powering off the attacker's ME in a step S3. During the attacker's ME power-off procedure, an attacker's security context SC' is stored in the USIM and in the attacker's AME. The serving network domain also has knowledge of this new security context SC'.

Besides this process, the attacker retrieves the SUPI of the victim from the USIM in a step S4.

The attacker then uses a programmable secure element USIM PSE and copies the victim's SUPI into the attacker's programmable USIM PSE, typically using a computer PC, in a step S5. Here it is noted that no removable property is necessary for the programmable secure element to implement the attack.

Steps S4 and S5 define the fraudulent manipulation addressed by the invention. This may occur while victim's secure element is stolen (e.g. from a locker or at work). The attacker can then temporarily substitute the victim's phone, recover the SIM and copies the victim's SUPI into the attacker's programmable USIM PSE before reinserting the USIM in the victim's mobile VME in a step S6, the mobile being then returned.

If USIM is not back to the victim, the victim will alert the MNO and thus the usage of the USIM will be blocked. This is the reason why USIM must be given back. The VME is thus again authenticated and connected as for a classical plastic roaming.

The attacker then inserts, in a step S7, the attacker's programmable USIM PSE including the SUPI of the victim's secure element into the attacker's AME.lt is here noted that the programmable USIM PSE may also be a secure element already integrated/embedded in an attacker's AME. However it is necessary for this AME to have a slot where to introduce the removable victim secure element VSE in order to perform the attack.

As the SUPI stored in the attacker's USIM PSE is the same as the one stored in the attacker's AME, the security context SC' as locally stored in the AME is automatically used to reconnect the attacker's AME to the network without re-authentication.

The reason for such a situation is that mobile equipments do not reset security contexts SC until the SUPI is changed according to 23.501. With such a process, an attacker could pretend to be someone else. As a consequence, the attacker's mobile equipment AME uses the Security Context SC', locally stored in the AME memory, as long as the SUPI associated to that security context SC' and the SUPI of the USIM PSE are the same.

Some approaches can solve this issue like increasing the frequency and the number of Authentication and Key Agreement mechanism. However this increases the network load and the energy consumption.

The use of the USIM PIN can also be made mandatory. In addition not to be practical for the user, this solution will not provide more security as fewer and fewer people use or overwrite the default MNO's PIN code.

Another possibility would be to erase the security context stored in the USIM when a new ME is detected but this solution is not acceptable as it would prevent "plastic roaming", which is besides a requirement.

Further alternative and advantageous solutions would, accordingly, be desirable in the art.

### SUMMARY OF THE INVENTION

The present invention aims at avoiding the above-mentioned malicious attacks.

The present invention is defined, in its broadest sense, as a removable secure element having a memory to store at least a universal user identifier, a security context, a list of mobile equipment identifiers in which the removable secure element was previously inserted, said removable secure element being dedicated to be inserted in a mobile equipment compliant with plastic roaming connecting and authenticating automatically the mobile equipment to a serving network using the security context stored in the removable secure element as soon as the universal user identifier stored in the removable secure element is the same as the one associated to the security context on the serving network side, said removable secure element further having an application to monitor an identifier of a mobile equipment in which the removable secure element is inserted, said application implementing:
- a retrieval of the identifier of the mobile equipment in which the removable secure element is inserted,
- a check of the presence of the retrieved identifier in the stored list of mobile equipment identifiers as stored,
- if the retrieved identifier is present in the list, a deletion of the security context as stored.

Once the security context is deleted, there is no possibility for the mobile equipment to connect and authenticate automatically at the serving network. New authentication data will be required. The serving network will not accept the previously used security context. It leads to an impossibility for the attacker's mobile equipment to automatically connect and authenticate at the serving network. The invention thus protects the universal identifier of the user of the removable secure element from impersonation according to the above-described attack. The application in the USIM thus monitors in an original way the ME identifier in order to erase the USIM files and thus, as a consequence, to automatically reset the terminal to prevent a SIM swap attacker to use its illicit security context to connect to the network.

According to a specific feature, said application further implements a monitoring of a mobile equipment change timing, the deletion being triggered when the retrieved identifier is present in the list and when the change timing is below a predetermined threshold.

This enables to refine the detection of an attack avoiding to force the user to re-authenticate while the user has used another mobile equipment for a while and returning to a previously used mobile equipment.

The present invention also relates to a method to protect a removable secure element against impersonation of a universal identifier of a user of the removable secure element, the removable secure element having a memory to store at least a universal user identifier, a security context, a list of mobile equipment identifiers in which the removable secure element was previously inserted, said method comprising the steps of, while the removable secure element is inserted in a mobile equipment:
- retrieving an identifier of the mobile equipment in which the removable secure element is inserted;
- checking the presence of the identifier in the list of mobile equipment identifiers as stored;
- if the identifier is present in the list, deleting the security context as stored.

This method, when implemented in a secure element, prevents the attack as described in the background of the invention part.

Optionally, the method further comprises the step of monitoring a mobile equipment change timing, the deletion being triggered when the retrieved identifier is present in the list and when the change timing is below a preconfigured threshold.

Advantageously, it further comprises the step of sending a request to authenticate with the serving network to the mobile equipment.

This step enables to speed up the start of the authentication of the user that will otherwise be inherent to the absence of the security context. It will thus invalidate the attacker's mobile equipment security context as soon as possible.

The invention then relates to an application dedicated to be installed and run in a removable secure element to monitor an identifier of a mobile equipment in which the removable secure element is inserted, the removable secure element having further a memory to store at least a universal user identifier, a security context, a list of mobile equipment identifiers in which the removable secure element was previously inserted, said application having instructions for the secure element to:
- retrieve an identifier of the mobile equipment in which the removable secure element is inserted;
- check the presence of the identifier in the list of mobile equipment identifiers as stored;
- if the identifier is present in the list, delete the security context as stored.

Optionally, the application further has instructions to monitor a mobile equipment change timing, the deletion being triggered when the retrieved identifier is present in the list and when the change timing is below a preconfigured threshold.

Advantageously, the application further has instructions to send a request to authenticate with the serving network to the mobile equipment.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates the attack as prevented with the invention;
- Figure 2 shows a flowchart of the anti-impersonate method of the invention implemented in a mobile equipment ME;
- Figure 3 illustrates the prevention of the attack thanks to the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

Figure 2 schematically shows a flowchart of a method of the invention as implemented in a secure element VSE of the invention. The secure element VSE has a memory to store the security context SC and other instructions and data necessary to the functioning of the VSE with the Mobile Equipment and the Networks. According to the method of the invention, once the secure element of the invention is inserted in a mobile equipment of a user ME in a step T0, an application/routine in the secure element VSE retrieves, in a step T1, an identifier I(ME) of the ME. In a step T2, the application/routine checks if the identifier I(ME) is included in an historic of Mobile Equipment Identifiers I(ME) where the VSE was previously inserted. Said historic is a list of Mobile Equipment identifiers stored in the memory of the secure element VSE.

If the identifier I(ME) is in the historic (case Y), the security context SC as stored in the memory of the secure element VSE is deleted by the application/routine in a step T3 and the connection and authentication routine is fully performed again by the secure element VSE in a step T4. If the identifier I(ME) is not in the historic (case N), this signs a plastic roaming and the connection and authentication is automatically re-established in a step T5.

The USIM VSE thus stores an historic of ME identities I(ME) where the USIM has been inserted into. When the USIM VSE detects that the same ME is used, i.e. if ME identity I(ME) is already in the history list, the security context stored in the USIM is cleared including the security context SC' and location information (LOCI) files. The deletion first occurs in the USIM, but it will also subsequently occur in the ME. It is the case as soon as the ME reads the security context in the USIM according to an application/routine executed in the USIM.

The absence of security context thus forces the ME to reset and then to perform authentication to the network. This is automatic as soon as no security context is available from USIM. Optionally, the timing of change of ME could be used to determine if an attack was performed. Typically, a short period of time between change of ME will correspond to an attack.

According to the invention, the secure element USIM identifies the current mobile equipment in which it is inserted and checks if the ME identifier is in the history list. The invention advantageously uses an already existing list, i.e. the EFIPD which contains the IMEI(SV) of Pairing Device as defined in TS 23.003 where USAT Application Pairing is supported (point 4.2.102 of ETSI TS 131 102 V12.13.0).

If the identifier of the ME in which the SE is inserted is present, the invention triggers an erase of at least USIM security contexts and request ME to reset and to force authentication.

Figure 3 schematically shows how the invention prevents the vulnerability as described in figure 1.

The invention intervenes at step S6, when the attacker inserts back the SE in the victim's ME. If the identifier of the ME is in the list, it triggers a deletion of the security context SC' which is thus not anymore valid to serve with the previously serving network. The connection and authentication are not anymore possible using the security context SC' as besides present on the attacker's ME AME. The attacker's mobile equipment, even if having the SUPI of the victim's secure element, cannot anymore connect or authenticate.

The solution of the invention is fully compatible with Plastic Roaming. It only impacts the secure element and can thus be deployed independently of the mobile equipment. It enables a pre/post issuance deployment scheme. It solves the identified security issue from mobile behaviors.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Removable secure element having a memory to store at least a universal user identifier, a security context, a list of mobile equipment identifiers in which the removable secure element was previously inserted, said removable secure element being dedicated to be inserted in a mobile equipment compliant with plastic roaming connecting and authenticating automatically the mobile equipment to a serving network using the security context stored in the removable secure element as soon as the universal user identifier stored in the removable secure element is the same as the one associated to the security context on the serving network side, said removable secure element further having an application to monitor an identifier of a mobile equipment in which the removable secure element is inserted, said application implementing:
- a retrieval of the identifier of the mobile equipment in which the removable secure element is inserted,
- a check of the presence of the retrieved identifier in the stored list of mobile equipment identifiers as stored,
- if the retrieved identifier is present in the list, a deletion of the security context as stored.

2. Removable secure element according to claim 1, wherein said application further implements a monitoring of a mobile equipment change timing, the deletion being triggered when the retrieved identifier is present in the list and when the change timing is below a preconfigured threshold.

3. Method to protect a removable secure element against impersonation of a universal identifier of a user of the removable secure element, the removable secure element having a memory to store at least a universal user identifier, a security context, a list of mobile equipment identifiers in which the removable secure element was previously inserted, said method comprising the steps of, while the removable secure element is inserted in a mobile equipment:
- retrieving an identifier of the mobile equipment in which the removable secure element is inserted;
- checking the presence of the identifier in the list of mobile equipment identifiers as stored;
- if the identifier is present in the list, deleting the security context as stored.

4. Method according to claim 3, further comprising the step of monitoring a mobile equipment change timing, the deletion being triggered when the retrieved identifier is present in the list and when the change timing is below a preconfigured threshold.

5. Method according to at least one of claims 3 and 4, further comprising the step of sending a request to authenticate with the serving network to the mobile equipment.

6. Application dedicated to be installed and run in a removable secure element to monitor an identifier of a mobile equipment in which the removable secure element is inserted, the removable secure element having further a memory to store at least a universal user identifier, a security context, a list of mobile equipment identifiers in which the removable secure element was previously inserted, said application having instructions for the secure element to:
- retrieve an identifier of the mobile equipment in which the removable secure element is inserted;
- check the presence of the identifier in the list of mobile equipment identifiers as stored;
- if the identifier is present in the list, delete the security context as stored.

7. Application according to claim 6, further having instructions to monitor a mobile equipment change timing, the deletion being triggered when the retrieved identifier is present in the list and when the change timing is below a preconfigured threshold.

8. Application according to at least one of claims 6 and 7, further having instructions to send a request to authenticate with the serving network to the mobile equipment.
